# EUROPEAN PATENT SPECIFICATION

(11) **EP 3 618 627 B1**
(45) Date of publication and mention of the grant of the patent: **02.12.2026**
(21) Application number: 18795116.5
(22) Date of filing: 02.05.2018
(51) Int. Cl.: A01N 43/54, A01N 43/40, A01N 43/653, A01P 3/00, C07C 229/08

(54) **USE OF AN ACYCLIC PICOLINAMIDE COMPOUND AS A FUNGICIDE FOR CONTROL OF PHYTOPATHOGENIC FUNGI IN ORCHARD, VINEYARD AND PLANTATION CROPS**
VERWENDUNG EINER ACYCLISCHEN PICOLINAMID-VERBINDUNG ALS FUNGIZID ZUR BEKÄMPFUNG VON PHYTOPATHOGENEN PILZEN BEI OBSTBAU-, WEINBAU- UND PLANTAGENPFLANZEN
COMPOSÉ PICOLINAMIDE ACYCLIQUE UTILISÉ COMME FONGICIDE POUR LUTTER CONTRE LES CHAMPIGNONS PHYTOPATHOGÈNES DANS LES VERGERS, LES VIGNOBLES ET LES CULTURES DE PLANTATION

(30) Priority: 02.05.2017 US 201762500175 P
(43) Date of publication of application: 11.03.2020
(73) Proprietor: Corteva Agriscience LLC, Indianapolis, IN 46268 (US)
(72) Inventor: BOSCO, Valentino, Indianapolis, IN 46268 (US); GALLUP, Courtney, Indianapolis, IN 46268 (US); YU, Alisa, Ye, 201203 Shanghai (CN); DA CUNHA, Luis, Claudio, Vieira, 13801 040 São Paulo City (BR); RAMIREZ CEDENO, Alejandro, Province Cartago (CR); CALIXTO, Alejandro, Wesley Chapel, FL 33543 (US); MARTIN, Marsha, Columbus, OH 43235 (US); MCKAY, Alistair, Clovis, CA 93619 (US); RICHBURG, John, Headland, AL 36345 (US)
(74) Representative: f & e patent
(86) International application number: PCT/US2018/030555
(87) International publication number: WO 2018/204433

(56) References cited:
- WO-A1-2016/106138
- WO-A1-2016/122802
- WO-A1-2016/122802
- US-A1- 2015 373 972
- US-A1- 2016 330 957

## Description

### FIELD

This present disclosure is related to the field of the use of (*S*)-1,1-bis(4-fluorophenyl)propan-2-yl (3-acetoxy-4-methoxypicolinoyl)-*L*-alaninate to control fungal diseases caused by *Botrytis cinerea* in orchard, vineyard and plantation crops.

### BACKGROUND AND SUMMARY

Fungicides are compounds, of natural or synthetic origin, which act to protect and cure plants against damage caused by agriculturally-relevant fungi. Generally, no single fungicide is useful in all situations. Consequently, research is ongoing to produce fungicides that may have better performance, are easier to use, and cost less.The present disclosure relates to (*S*)-1,1-bis(4-fluorophenyl)propan-2-yl (3-acetoxy-4-methoxypicolinoyl)-*L*-alaninate (compound I) and its use as a fungicide in a method of controlling a pathogen-induced disease in a plant that is at risk of being diseased from the pathogen according to claim 1 comprising contacting the plant or an area adjacent to the plant with a composition including compound I.

### DETAILED DESCRIPTION

One exemplary embodiment of the present disclosure includes mixtures for controlling the growth of fungi, the mixture including compound I:

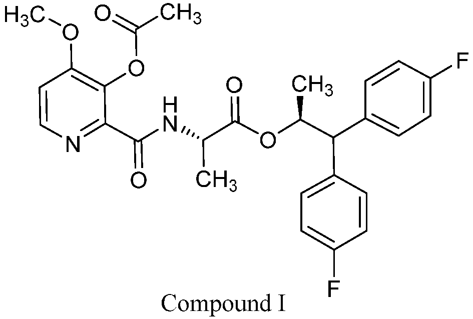

Compound I of the present disclosure may be applied by any of a variety of known techniques, either as compound I or as formulations comprising compound I. For example, compound I may be applied to the roots, stems, seeds, flowers, or foliage of plants for the control of various fungi, without damaging the commercial value of the plants. Compound I may also be applied as a foliar spray, chemigation, soil drench, soil injection, soil spray, soil incorporation, or seed treatment. The material may be applied in the form of any of the generally used formulation types, for example, as solutions, dusts, wettable powders, flowable concentrates, or emulsifiable concentrates.

Preferably, compound I of the present disclosure is applied in the form of a formulation, including compound I with a phytologically acceptable carrier. Concentrated formulations may be dispersed in water or other liquids for application, or formulations may be dust-like or granular, which may then be applied without further treatment. The formulations can be prepared according to procedures that are conventional in the agricultural chemical art.

The present disclosure contemplates all vehicles by which compound I may be formulated for delivery and use as a fungicide. Typically, formulations are applied as aqueous suspensions or emulsions. Such suspensions or emulsions may be produced from water-soluble, water-suspendible, or emulsifiable formulations which are solids, usually known as wettable powders; or liquids, usually known as emulsifiable concentrates, aqueous suspensions, or suspension concentrates. As will be readily appreciated, any material to which compound I may be added may be used, provided it yields the desired utility without significant interference with the activity of compound I as an antifungal agent.

Wettable powders, which may be compacted to form water-dispersible granules, comprise an intimate mixture including compound I, an inert carrier and surfactants. The concentration of compound I in the wettable powder may be from about 10 percent to about 90 percent by weight based on the total weight of the wettable powder, more preferably about 25 weight percent to about 75 weight percent. In the preparation of wettable powder formulations, compound I may be compounded with any finely divided solid, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier and surfactants are typically blended with compound I and milled.

Emulsifiable concentrates of compound I may comprise a convenient concentration, such as from about 10 weight percent to about 50 weight percent of compound I, in a suitable liquid, based on the total weight of the concentrate. Compound I may be dissolved in an inert carrier, which is either a water-miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum, such as heavy aromatic naphtha. Other organic solvents may also be used, for example, terpenic solvents, including rosin derivatives, aliphatic ketones, such as cyclohexanone, and complex alcohols, such as 2-ethoxyethanol.

Emulsifiers which may be advantageously employed herein may be readily determined by those skilled in the art and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulphonic acids, oil-soluble salts or sulfated polyglycol ethers and appropriate salts of phosphated polyglycol ether.

Representative organic liquids which may be employed in preparing the emulsifiable concentrates of compound I of the present invention are the aromatic liquids such as xylene, propyl benzene fractions; or mixed naphthalene fractions, mineral oils, substituted aromatic organic liquids such as dioctyl phthalate; kerosene; dialkyl amides of various fatty acids, particularly the dimethyl amides of fatty glycols and glycol derivatives such as the n-butyl ether, ethyl ether or methyl ether of diethylene glycol, and the methyl ether of triethylene glycol and the like. Mixtures of two or more organic liquids may also be employed in the preparation of the emulsifiable concentrate. Organic liquids include xylene, and propyl benzene fractions, with xylene being most preferred in some cases. Surface-active dispersing agents are typically employed in liquid formulations and in an amount of from 0.1 to 20 percent by weight based on the combined weight of the dispersing agent with compound I. The formulations can also contain other compatible additives, for example, plant growth regulators and other biologically active compounds used in agriculture.

Aqueous suspensions including compound I may be dispersed in an aqueous vehicle at a concentration in the range from about 5 to about 50 weight percent, based on the total weight of the aqueous suspension. Suspensions are prepared by finely grinding compound I, and vigorously mixing the ground material into a vehicle comprised of water and surfactants chosen from the same types discussed above. Other components, such as inorganic salts and synthetic or natural gums, may also be added to increase the density and viscosity of the aqueous vehicle.

Compound I may also be applied as a granular formulation, which is particularly useful for applications to the soil. Granular formulations generally contain from about 0.5 to about 10 weight percent, based on the total weight of the granular formulation of compound I, dispersed in an inert carrier which consists entirely or in large part of coarsely divided inert material such as attapulgite, bentonite, diatomite, clay or a similar inexpensive substance. Such formulations are usually prepared by dissolving compound I in a suitable solvent and applying it to a granular carrier which has been preformed to the appropriate particle size, in the range of from about 0.5 to about 3 mm. A suitable solvent is a solvent in which compound I is substantially or completely soluble. Such formulations may also be prepared by making a dough or paste of the carrier and compound I and solvent, and crushing and drying to obtain the desired granular particle.

Dusts containing compound I may be prepared by intimately mixing compound I in powdered form with a suitable dusty agricultural carrier, such as, for example, kaolin clay, ground volcanic rock, and the like. Dusts can suitably contain from about 1 to about 10 weight percent of compound I, based on the total weight of the dust.

The formulations may additionally contain adjuvant surfactants to enhance deposition, wetting and penetration of compound I onto the target crop and organism. These adjuvant surfactants may optionally be employed as a component of the formulation or as a tank mix. The amount of adjuvant surfactant will typically vary from 0.01 to 1.0 percent by volume, based on a spray-volume of water, preferably 0.05 to 0.5 volume percent. Suitable adjuvant surfactants include, but are not limited to ethoxylated nonyl phenols, ethoxylated synthetic or natural alcohols, salts of the esters or sulphosuccinic acids, ethoxylated organosilicones, ethoxylated fatty amines and blends of surfactants with mineral or vegetable oils. The formulations may also include oil-in-water emulsions such as those disclosed in U.S. Patent Application Serial No. 11/495,228, the disclosure of which is expressly incorporated by reference herein.

In certain instances, it would be beneficial for formulations of compound I to be sprayed via an aerial application using aircraft or helicopters. The exact components of these aerial applications depends upon the crop being treated. Aerial applications for cereals utilize spray volumes preferably from 15 to 50 L/ha with standard spreading or penetrating type adjuvants such as non-ionic surfactants, organosilicones, or crop oils, preferably from 0.05 to 15 percent, based on a spray volume of water. Aerial applications for fruit bearing crops, such as bananas, may utilize lower application volumes with higher adjuvant concentrations, preferably in the form of sticker adjuvants, such as fatty acids, latex, aliphatic alcohols, crop oils and inorganic oils. Typical spray volumes for fruit bearing crops are preferably from 15 to 30 L/ha with adjuvant concentrations reaching up to 30% based on a spray volume of water. A typical example might include, but not limited to, an application volume of 23 L/ha, with a 30% paraffin oil sticker adjuvant concentration (e.g. Spraytex CT).

The formulations may optionally include combinations that contain other pesticidal compounds. Such additional pesticidal compounds may be fungicides, insecticides, herbicides, nematicides, miticides, arthropodicides, bactericides or combinations thereof that are compatible with the compounds of the present invention in the medium selected for application, and not antagonistic to the activity of the present compounds. Accordingly, in such embodiments, the other pesticidal compound is employed as a supplemental toxicant for the same or for a different pesticidal use. Compound I and the pesticidal compound in the combination can generally be present in a weight ratio of from 1:100 to 100:1.

Compound I of the present disclosure may also be combined with other fungicides to form fungicidal mixtures and synergistic mixtures thereof. Compound I of the present disclosure is often applied in conjunction with one or more other fungicides to control a wider variety of undesirable diseases. When used in conjunction with other fungicide(s), the presently claimed compound I may be formulated with the other fungicide(s), tank-mixed with the other fungicide(s) or applied sequentially with the other fungicide(s). Such other fungicides may include 2-(thiocyanatomethylthio)-benzothiazole, 2-phenylphenol, 8-hydroxyquinoline sulfate, ametoctradin, amisulbrom, antimycin, *Ampelomyces quisqualis,* azaconazole, azoxystrobin, *Bacillus subtilis, Bacillus subtilis* strain QST713, benalaxyl, benomyl, benthiavalicarb-isopropyl, benzylaminobenzene-sulfonate (BABS) salt, bicarbonates, biphenyl, bismerthiazol, bitertanol, bixafen, blasticidin-S, borax, Bordeaux mixture, boscalid, bromuconazole, bupirimate, calcium polysulfide, captafol, captan, carbendazim, carboxin, carpropamid, carvone, chlazafenone, chloroneb, chlorothalonil, chlozolinate, *Coniothyrium minitans,* copper hydroxide, copper octanoate, copper oxychloride, copper sulfate, copper sulfate (tribasic), cuprous oxide, cyazofamid, cyflufenamid, cymoxanil, cyproconazole, cyprodinil, dazomet, debacarb, diammonium ethylenebis-(dithiocarbamate), dichlofluanid, dichlorophen, diclocymet, diclomezine, dichloran, diethofencarb, difenoconazole, difenzoquat ion, diflumetorim, dimethomorph, dimoxystrobin, diniconazole, diniconazole-M, dinobuton, dinocap, diphenylamine, dithianon, dodemorph, dodemorph acetate, dodine, dodine free base, edifenphos, enestrobin, enestroburin, epoxiconazole, ethaboxam, ethoxyquin, etridiazole, famoxadone, fenamidone, fenarimol, fenbuconazole, fenfuram, fenhexamid, fenoxanil, fenpiclonil, fenpropidin, fenpropimorph, fenpyrazamine, fentin, fentin acetate, fentin hydroxide, ferbam, ferimzone, fluazinam, fludioxonil, flumorph, fluopicolide, fluopyram, fluoroimide, fluoxastrobin, fluquinconazole, flusilazole, flusulfamide, flutianil, flutolanil, flutriafol, fluxapyroxad, folpet, formaldehyde, fosetyl, fosetyl-aluminium, fuberidazole, furalaxyl, furametpyr, guazatine, guazatine acetates, GY-81, hexachlorobenzene, hexaconazole, hymexazol, imazalil, imazalil sulfate, imibenconazole, iminoctadine, iminoctadine triacetate, iminoctadine tris(albesilate), iodocarb, ipconazole, ipfenpyrazolone, iprobenfos, iprodione, iprovalicarb, isoprothiolane, isopyrazam, isotianil, kasugamycin, kasugamycin hydrochloride hydrate, kresoxim-methyl, laminarin, mancopper, mancozeb, mandipropamid, maneb, mefenoxam, mepanipyrim, mepronil, meptyl-dinocap, mercuric chloride, mercuric oxide, mercurous chloride, metalaxyl, metalaxyl-M, metam, metam-ammonium, metam-potassium, metam-sodium, metconazole, methasulfocarb, methyl iodide, methyl isothiocyanate, metiram, metominostrobin, metrafenone, mildiomycin, myclobutanil, nabam, nitrothal-isopropyl, nuarimol, octhilinone, ofurace, oleic acid (fatty acids), orysastrobin, oxadixyl, oxinecopper, oxpoconazole fumarate, oxycarboxin, pefurazoate, penconazole, pencycuron, penflufen, pentachlorophenol, pentachlorophenyl laurate, penthiopyrad, phenylmercury acetate, phosphonic acid, phthalide, picoxystrobin, polyoxin B, polyoxins, polyoxorim, potassium bicarbonate, potassium hydroxyquinoline sulfate, probenazole, prochloraz, procymidone, propamocarb, propamocarb hydrochloride, propiconazole, propineb, proquinazid, prothioconazole, pyraclostrobin, pyrametostrobin, pyraoxystrobin, pyrazophos, pyribencarb, pyributicarb, pyrifenox, pyrimethanil, pyriofenone, pyroquilon, quinoclamine, quinoxyfen, quintozene, *Reynoutria sachalinensis* extract, sedaxane, silthiofam, simeconazole, sodium 2-phenylphenoxide, sodium bicarbonate, sodium pentachlorophenoxide, spiroxamine, sulfur, SYP-Z048, tar oils, tebuconazole, tebufloquin, tecnazene, tetraconazole, thiabendazole, thifluzamide, thiophanate-methyl, thiram, tiadinil, tolclofos-methyl, tolylfluanid, triadimefon, triadimenol, triazoxide, tricyclazole, tridemorph, trifloxystrobin, triflumizole, triforine, triphenyltin hydroxide, triticonazole, validamycin, valifenalate, valiphenal, vinclozolin, zineb, ziram, zoxamide, *Candida oleophila, Fusarium oxysporum, Gliocladium* spp., *Phlebiopsis gigantea, Streptomyces griseoviridis, Trichoderma* spp., (*RS*)-*N*-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme, aminopyrifen, ampropylfos, anilazine, azithiram, barium polysulfide, Bayer 32394, benodanil, benquinox, bentaluron, benzamacril; benzamacrilisobutyl, benzamorf, benzovindiflupyr, binapacryl, bis(methylmercury) sulfate, bis(tributyltin) oxide, buthiobate, cadmium calcium copper zinc chromate sulfate, carbamorph, CECA, chlobenthiazone, chloraniformethan, chlorfenazole, chlorquinox, climbazole, copper bis(3-phenylsalicylate), copper zinc chromate, coumoxystrobin, cufraneb, cupric hydrazinium sulfate, cuprobam, cyclafuramid, cypendazole, cyprofuram, decafentin, dichlobentiazox, dichlone, dichlozoline, diclobutrazol, dimethirimol, dinocton, dinosulfon, dinoterbon, dipymetitrone, dipyrithione, ditalimfos, dodicin, drazoxolon, EBP, enoxastrobin, ESBP, etaconazole, etem, ethirim, fenaminosulf, fenaminstrobin, fenapanil, fenitropan, fenpicoxamid, fluindapyr, fluopimomide, fluotrimazole, flufenoxystrobin, furcarbanil, furconazole, furconazole-cis, furmecyclox, furophanate, glyodine, griseofulvin, halacrinate, Hercules 3944, hexylthiofos, ICIA0858, inpyrfluxam, ipfentrifluconazole, ipflufenoquin, isofetamid, isoflucypram, isopamphos, isovaledione, mandestrobin, mebenil, mecarbinzid, mefentrifluconazole, metazoxolon, methfuroxam, methylmercury dicyandiamide, metsulfovax, metyltetraprole, milneb, mucochloric anhydride, myclozolin, *N*-3,5-dichlorophenyl-succinimide, *N*-3-nitrophenylitaconimide, natamycin, *N*-ethylmercurio-4-toluenesulfonanilide, nickel bis(dimethyldithiocarbamate), OCH, oxathiapiprolin, phenylmercury dimethyldithiocarbamate, phenylmercury nitrate, phosdiphen, picarbutrazox, prothiocarb; prothiocarb hydrochloride, pydiflumetofen, pyracarbolid, pyrapropoyne, pyraziflumid, pyridachlometyl, pyridinitril, pyrisoxazole, pyroxychlor, pyroxyfur, quinacetol, quinacetol sulfate, quinazamid, quinconazole, quinofumelin, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, triclopyricarb, triflumezopyrim, urbacid, zarilamid, and any combinations thereof.

Additionally, compound I of the present invention may be combined with other pesticides, including insecticides, nematicides, miticides, arthropodicides, bactericides or combinations thereof that are compatible with compound I of the present invention in the medium selected for application, and not antagonistic to the activity of compound I, to form pesticidal mixtures and synergistic mixtures thereof. Compound I of the present disclosure may be applied in conjunction with one or more other pesticides to control a wider variety of undesirable pests. When used in conjunction with other pesticides, the presently claimed compound I may be formulated with the other pesticide(s), tank mixed with the other pesticide(s) or applied sequentially with the other pesticide(s). Typical insecticides include, but are not limited to: *antibiotic insecticides* such as allosamidin and thuringiensin; *macrocyclic lactone insecticides* such as spinosad and spinetoram; *avermectin insecticides* such as abamectin, doramectin, emamectin, eprinomectin, ivermectin and selamectin; *milbemycin insecticides* such as lepimectin, milbemectin, milbemycin oxime and moxidectin; *carbamate insecticides* such as bendiocarb and carbaryl; *benzofuranyl methylcarbamate insecticides* such as benfuracarb, carbofuran, carbosulfan, decarbofuran and furathiocarb; *dimethylcarbamate insecticides* dimitan, dimetilan, hyquincarb and pirimicarb; *oxime carbamate insecticides* such as alanycarb, aldicarb, aldoxycarb, butocarboxim, butoxycarboxim, methomyl, nitrilacarb, oxamyl, tazimcarb, thiocarboxime, thiodicarb and thiofanox; *phenyl methylcarbamate insecticides* such as allyxycarb, aminocarb, bufencarb, butacarb, carbanolate, cloethocarb, dicresyl, dioxacarb, EMPC, ethiofencarb, fenethacarb, fenobucarb, isoprocarb, methiocarb, metolcarb, mexacarbate, promacyl, promecarb, propoxur, trimethacarb, XMC and xylylcarb; *dessicant insecticides* such as boric acid, diatomaceous earth and silica gel; *diamide insecticides* such as broflanilide, chlorantraniliprole, cyantraniliprole, cyclaniliprole, cyhalodiamide, flubendiamide, tetrachlorantraniliprole, and tetraniliprole; *diarylisoxazoline insecticides* such as fluxametamide; *dinitrophenol insecticides* such as dinex, dinoprop, dinosam and DNOC; *fluorine insecticides* such as barium hexafluorosilicate, cryolite, sodium fluoride, sodium hexafluorosilicate and sulfluramid; *formamidine insecticides* such as amitraz, chlordimeform, formetanate and formparanate; *fumigant insecticides* such as acrylonitrile, carbon disulfide, carbon tetrachloride, chloroform, chloropicrin, para-dichlorobenzene, 1,2-dichloropropane, ethyl formate, ethylene dibromide, ethylene dichloride, ethylene oxide, hydrogen cyanide, iodomethane, methyl bromide, methylchloroform, methylene chloride, naphthalene, phosphine, sulfuryl fluoride and tetrachloroethane; *inorganic insecticides* such as borax, calcium polysulfide, copper oleate, mercurous chloride, potassium thiocyanate and sodium thiocyanate; *chitin synthesis inhibitors* such as bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron and triflumuron; *juvenile hormone mimics* such as epofenonane, fenoxycarb, hydroprene, kinoprene, methoprene, pyriproxyfen and triprene; *juvenile hormones* such as juvenile hormone I, juvenile hormone II and juvenile hormone III; mesoionic insecticides such as dicloromezotiaz and triflumezopyrim; *moulting hormone agonists* such as chromafenozide, halofenozide, methoxyfenozide and tebufenozide; *moulting hormones* such as α-ecdysone and ecdysterone; *moulting inhibitors* such as diofenolan; *precocenes* such as precocene I, precocene II and precocene III; *unclassified insect growth regulators* such as dicyclanil; *nereistoxin analogue insecticides* such as bensultap, cartap, thiocyclam and thiosultap; *pyridylpyrazole insecticides* such as tyclopyrazoflor; *nicotinoid insecticides* such as flonicamid; *nitroguanidine insecticides* such as clothianidin, dinotefuran, imidacloprid and thiamethoxam; *nitromethylene insecticides* such as nitenpyram and nithiazine; *pyridylmethyl-amine insecticides* such as acetamiprid, cycloxaprid, imidacloprid, nitenpyram, and thiacloprid; *organochlorine insecticides* such as bromo-DDT, camphechlor, DDT, pp'-DDT, ethyl-DDD, HCH, gamma-HCH, lindane, methoxychlor, pentachlorophenol and TDE; *cyclodiene insecticides* such as aldrin, bromocyclen, chlorbicyclen, chlordane, chlordecone, dieldrin, dilor, endosulfan, alpha-endosulfan, endrin, HEOD, heptachlor, HHDN, isobenzan, isodrin, kelevan and mirex; *organophosphate insecticides* such as bromfenvinfos, chlorfenvinphos, crotoxyphos, dichlorvos, dicrotophos, dimethylvinphos, fospirate, heptenophos, methocrotophos, mevinphos, monocrotophos, naled, naftalofos, phosphamidon, propaphos, TEPP and tetrachlorvinphos; *organothiophosphate insecticides* such as dioxabenzofos, fosmethilan and phenthoate; *aliphatic organothiophosphate insecticides* such as acethion, amiton, cadusafos, chlorethoxyfos, chlormephos, demephion, demephion-O, demephion-S, demeton, demeton-O, demeton-S, demeton-methyl, demeton-O-methyl, demeton-S-methyl, demeton-S-methylsulphon, disulfoton, ethion, ethoprophos, IPSP, isothioate, malathion, methacrifos, oxydemeton-methyl, oxydeprofos, oxydisulfoton, phorate, sulfotep, terbufos and thiometon; *aliphatic amide organothiophosphate insecticides* such as amidithion, cyanthoate, dimethoate, ethoate-methyl, formothion, mecarbam, omethoate, prothoate, sophamide and vamidothion; *oxime organothiophosphate insecticides* such as chlorphoxim, phoxim and phoxim-methyl; *heterocyclic organothiophosphate insecticides* such as azamethiphos, coumaphos, coumithoate, dioxathion, endothion, menazon, morphothion, phosalone, pyraclofos, pyridaphenthion and quinothion; *benzothiopyran organothiophosphate insecticides* such as dithicrofos and thicrofos; *benzotriazine organothiophosphate insecticides* such as azinphos-ethyl and azinphos-methyl; *isoindole organothiophosphate insecticides* such as dialifos and phosmet; *isoxazole organothiophosphate insecticides* such as isoxathion and zolaprofos; *pyrazolopyrimidine organothiophosphate insecticides* such as chlorprazophos and pyrazophos; *pyridine organothiophosphate insecticides* such as chlorpyrifos and chlorpyrifos-methyl; *pyrimidine organothiophosphate insecticides* such as butathiofos, diazinon, etrimfos, lirimfos, pirimiphos-ethyl, pirimiphos-methyl, primidophos, pyrimitate and tebupirimfos; *quinoxaline organothiophosphate insecticides* such as quinalphos and quinalphos-methyl; *thiadiazole organothiophosphate insecticides* such as athidathion, lythidathion, methidathion and prothidathion; *triazole organothiophosphate insecticides* such as isazofos and triazophos; *phenyl organothiophosphate insecticides* such as azothoate, bromophos, bromophos-ethyl, carbophenothion, chlorthiophos, cyanophos, cythioate, dicapthon, dichlofenthion, etaphos, famphur, fenchlorphos, fenitrothion fensulfothion, fenthion, fenthion-ethyl, heterophos, jodfenphos, mesulfenfos, parathion, parathion-methyl, phenkapton, phosnichlor, profenofos, prothiofos, sulprofos, temephos, trichlormetaphos-3 and trifenofos; *phosphonate insecticides* such as butonate and trichlorfon; *phosphonothioate insecticides* such as mecarphon; *phenyl ethylphosphonothioate insecticides* such as fonofos and trichloronat; *phenyl phenylphosphonothioate insecticides* such as cyanofenphos, EPN and leptophos; *phosphoramidate insecticides* such as crufomate, fenamiphos, fosthietan, mephosfolan, phosfolan and pirimetaphos; *phosphoramidothioate insecticides* such as acephate, isocarbophos, isofenphos, isofenphos-methyl, methamidophos and propetamphos; *phosphorodiamide insecticides* such as dimefox, mazidox, mipafox and schradan; *oxadiazine insecticides* such as indoxacarb; *oxadiazoline insecticides* such as metoxadiazone; *phthalimide insecticides* such as dialifos, phosmet and tetramethrin; *pyrazole insecticides* such as tebufenpyrad, tolefenpyrad; *phenylpyrazole insecticides* such as acetoprole, ethiprole, fipronil, pyrafluprole, pyriprole and vaniliprole; *pyrethroid ester insecticides* such as acrinathrin, allethrin, bioallethrin, barthrin, bifenthrin, kappa-bifenthrin, bioethanomethrin, chloroprallethrin, cyclethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, zeta-cypermethrin, cyphenothrin, deltamethrin, dimefluthrin, dimethrin, empenthrin, fenfluthrin, fenpirithrin, fenpropathrin, fenvalerate, esfenvalerate, flucythrinate, fluvalinate, tau-fluvalinate, furethrin, heptafluthrin, imiprothrin, meperfluthrin, metofluthrin, epsilon-metofluthrin, momfluorothrin, epsilon-momfluorothrin, permethrin, biopermethrin, transpermethrin, phenothrin, prallethrin, profluthrin, pyresmethrin, resmethrin, bioresmethrin, cismethrin, tefluthrin, kappa-tefluthrin, terallethrin, tetramethrin, tetramethylfluthrin, tralomethrin and transfluthrin; *pyrethroid ether insecticides* such as etofenprox, flufenprox, halfenprox, protrifenbute and silafluofen; *pyrimidinamine insecticides* such as flufenerim and pyrimidifen; *pyrrole insecticides* such as chlorfenapyr; *tetramic acid insecticides* such as spiropidion and spirotetramat; *tetronic acid insecticides* such as spiromesifen; *thiourea insecticides* such as diafenthiuron; *urea insecticides* such as flucofuron and sulcofuron; *unclassified nematicides* such as fluazaindolizine and tioxazafen; and *unclassified insecticides* such as benzpyrimoxan, closantel, copper naphthenate, crotamiton, EXD, fenazaflor, fenoxacrim, fluhexafon, flupyrimin, hydramethylnon, isoprothiolane, malonoben, metaflumizone, nifluridide, oxazolsulfyl, plifenate, pyridaben, pyridalyl, pyrifluquinazon, rafoxanide, sulfoxaflor, triarathene and triazamate, and any combinations thereof.

Additionally, compound I of the present invention may be combined with herbicides that are compatible with compound I of the present invention in the medium selected for application, and not antagonistic to the activity of compound I to form pesticidal mixtures and synergistic mixtures thereof. The fungicidal compound I of the present disclosure may be applied in conjunction with one or more herbicides to control a wide variety of undesirable plants. When used in conjunction with herbicides, the presently claimed compound I may be formulated with the herbicide(s), tank mixed with the herbicide(s) or applied sequentially with the herbicide(s). Typical herbicides include, but are not limited to: *amide herbicides* such as allidochlor, beflubutamid, benzadox, benzipram, bromobutide, cafenstrole, CDEA, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid, tebutam and tiafenacil; *anilide herbicides* such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil; *arylalanine herbicides* such as benzoylprop, flamprop and flamprop-M; *chloroacetanilide herbicides* such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor; *sulfonanilide herbicides* such as benzofluor, perfluidone, pyrimisulfan and profluazol; *sulfonamide herbicides* such as asulam, carbasulam, fenasulam and oryzalin; *thioamide herbicides* such as chlorthiamid; *antibiotic herbicides* such as bilanafos; *benzoic acid herbicides* such as chloramben, dicamba, 2,3,6-TBA and tricamba; *pyrimidinyloxybenzoic acid herbicides* such as bispyribac and pyriminobac; *pyrimidinylthiobenzoic acid herbicides* such as pyrithiobac; *phthalic acid herbicides* such as chlorthal; *picolinic acid herbicides* such as aminopyralid, clopyralid, florpyrauxifen, halauxifen, and picloram; *quinolinecarboxylic acid herbicides* such as quinclorac and quinmerac; *arsenical herbicides* such as cacodylic acid, CMA, DSMA, hexaflurate, MAA, MAMA, MSMA, potassium arsenite and sodium arsenite; *benzoylcyclohexanedione herbicides* such as fenquinotrione, lancotrione, mesotrione, sulcotrione, tefuryltrione and tembotrione; *benzofuranyl alkylsulfonate herbicides* such as benfuresate and ethofumesate; *benzothiazole herbicides* such as benzazolin; *carbamate herbicides* such as asulam, carboxazole chlorprocarb, dichlormate, fenasulam, karbutilate and terbucarb; *carbanilate herbicides* such as barban, BCPC, carbasulam, carbetamide, CEPC, chlorbufam, chlorpropham, CPPC, desmedipham, phenisopham, phenmedipham, phenmediphamethyl, propham and swep; *cyclohexene oxime herbicides* such as alloxydim, butroxydim, clethodim, cloproxydim, cycloxydim, profoxydim, sethoxydim, tepraloxydim and tralkoxydim; *cyclopropylisoxazole herbicides* such as isoxachlortole and isoxaflutole; *dicarboximide herbicides* such as cinidon-ethyl, flumezin, flumiclorac, flumioxazin and flumipropyn; *dinitroaniline herbicides* such as benfluralin, butralin, dinitramine, ethalfluralin, fluchloralin, isopropalin, methalpropalin, nitralin, oryzalin, pendimethalin, prodiamine, profluralin and trifluralin; *dinitrophenol herbicides* such as dinofenate, dinoprop, dinosam, dinoseb, dinoterb, DNOC, etinofen and medinoterb; *diphenyl ether herbicides* such as ethoxyfen; *nitrophenyl ether herbicides* such as acifluorfen, aclonifen, bifenox, chlomethoxyfen, chlornitrofen, etnipromid, fluorodifen, fluoroglycofen, fluoronitrofen, fomesafen, furyloxyfen, halosafen, lactofen, nitrofen, nitrofluorfen and oxyfluorfen; *dithiocarbamate herbicides* such as dazomet and metam; *halogenated aliphatic herbicides* such as alorac, chloropon, dalapon, flupropanate, hexachloroacetone, iodomethane, methyl bromide, monochloroacetic acid, SMA and TCA; *imidazolinone herbicides* such as imazamethabenz, imazamox, imazapic, imazapyr, imazaquin and imazethapyr; *inorganic herbicides* such as ammonium sulfamate, borax, calcium chlorate, copper sulfate, ferrous sulfate, potassium azide, potassium cyanate, sodium azide, sodium chlorate and sulfuric acid; *nitrile herbicides* such as bromobonil, bromoxynil, chloroxynil, cyclopyranil, dichlobenil, iodobonil, ioxynil and pyraclonil; *organophosphorus herbicides* such as amiprofos-methyl, anilofos, bensulide, bilanafos, butamifos, 2,4-DEP, DMPA, EBEP, fosamine, glufosinate, glufosinate-P, glyphosate and piperophos; *phenoxy herbicides* such as bromofenoxim, clomeprop, 2,4-DEB, 2,4-DEP, difenopenten, disul, erbon, etnipromid, fenteracol and trifopsime; *oxadiazoline herbicides* such as methazole, oxadiargyl, oxadiazon; *oxazole herbicides* such as fenoxasulfone; *phenoxyacetic herbicides* such as 4-CPA, 2,4-D, 3,4-DA, MCPA, MCPA-thioethyl and 2,4,5-T; *phenoxybutyric herbicides* such as 4-CPB, 2,4-DB, 3,4-DB, MCPB and 2,4,5-TB; *phenoxypropionic herbicides* such as cloprop, 4-CPP, dichlorprop, dichlorprop-P, 3,4-DP, fenoprop, mecoprop and mecoprop-P; *aryloxyphenoxypropionic herbicides* such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; *phenylenediamine herbicides* such as dinitramine and prodiamine; *pyrazole herbicides* such as pyroxasulfone; *benzoylpyrazole herbicides* such as benzofenap, pyrasulfotole, pyrazolynate, pyrazoxyfen, tolpyralate, and topramezone; *phenylpyrazole herbicides* such as fluazolate, nipyraclofen, pioxaden and pyraflufen; *pyridazine herbicides* such as credazine, cyclopyrimorate, pyridafol and pyridate; *pyridazinone herbicides* such as brompyrazon, chloridazon, dimidazon, flufenpyr, metflurazon, norflurazon, oxapyrazon and pydanon; *pyridine herbicides* such as aminopyralid, cliodinate, clopyralid, dithiopyr, florpyrauxifen, fluroxypyr, halauxifen, haloxydine, picloram, picolinafen, pyriclor, thiazopyr and triclopyr; *pyrimidinediamine herbicides* such as iprymidam and tioclorim; *quaternary ammonium herbicides* such as cyperquat, diethamquat, difenzoquat, diquat, morfamquat and paraquat; *thiocarbamate herbicides* such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vernolate; *thiocarbonate herbicides* such as dimexano, EXD and proxan; *thiourea herbicides* such as methiuron; *triazine herbicides* such as dipropetryn, indaziflam, triaziflam and trihydroxytriazine; *chlorotriazine herbicides* such as atrazine, chlorazine, cyanazine, cyprazine, eglinazine, ipazine, mesoprazine, procyazine, proglinazine, propazine, sebuthylazine, simazine, terbuthylazine and trietazine; *methoxytriazine herbicides* such as atraton, methometon, prometon, secbumeton, simeton and terbumeton; *methylthiotriazine herbicides* such as ametryn, aziprotryne, cyanatryn, desmetryn, dimethametryn, methoprotryne, prometryn, simetryn and terbutryn; *triazinone herbicides* such as ametridione, amibuzin, hexazinone, isomethiozin, metamitron, metribuzin, and trifludimoxazin; *triazole herbicides* such as amitrole, cafenstrole, epronaz and flupoxam; *triazolone herbicides* such as amicarbazone, bencarbazone, carfentrazone, flucarbazone, ipfencarbazone, propoxycarbazone, sulfentrazone and thiencarbazone-methyl; *triazolopyrimidine herbicides* such as cloransulam, diclosulam, florasulam, flumetsulam, metosulam, penoxsulam and pyroxsulam; *uracil herbicides* such as benzfendizone, bromacil, butafenacil, flupropacil, isocil, lenacil, saflufenacil and terbacil; *urea herbicides* such as benzthiazuron, cumyluron, cycluron, dichloralurea, diflufenzopyr, isonoruron, isouron, methabenzthiazuron, monisouron and noruron; *phenylurea herbicides* such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron; *pyrimidinylsulfonylurea herbicides* such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, metazosulfuron, nicosulfuron, orthosulfamuron, oxasulfuron, primisulfuron, propyrisulfuron, pyrazosulfuron, rimsulfuron, sulfometuron, sulfosulfuron and trifloxysulfuron; *triazinylsulfonylurea herbicides* such as chlorsulfuron, cinosulfuron, ethametsulfuron, iodosulfuron, iofensulfuron, metsulfuron, prosulfuron, thifensulfuron, triasulfuron, tribenuron, triflusulfuron and tritosulfuron; *thiadiazolylurea herbicides* such as buthiuron, ethidimuron, tebuthiuron, thiazafluron and thidiazuron; and *unclassified herbicides* such as acrolein, allyl alcohol, aminocyclopyrachlor, azafenidin, bentazone, benzobicyclon, bicyclopyrone, buthidazole, calcium cyanamide, cambendichlor, chlorfenac, chlorfenprop, chlorflurazole, chlorflurenol, cinmethylin, clomazone, CPMF, cresol, cyanamide, cyclopyrimorate, *ortho*-dichlorobenzene, dimepiperate, endothal, fluoromidine, fluridone, flurochloridone, flurtamone, fluthiacet, indanofan, methyl isothiocyanate, OCH, oxaziclomefone, pentachlorophenol, pentoxazone, phenylmercury acetate, prosulfalin, pyribenzoxim, pyriftalid, quinoclamine, rhodethanil, sulglycapin, thidiazimin, tridiphane, trimeturon, tripropindan and tritac.

Compound I of the present invention can also comprise or may be applied together and/or sequentially with further active compounds. These further compounds can be plant health stimulants, such as organic compounds, inorganic fertilizers, or micronutrient donors or other preparations that influence plant growth, such as inoculants.

In another embodiment, Compound I can also comprise or may be applied together and/or sequentially with other biological organisms, such as, but not limited to the group consisting of *Bacillus* strains, for example *Bacillus subtilis* var. *amyloiquefaciens* FZB24 (TAEGRP^{®}) and *Bacillus amyloiquefaciens* FZB42 (RHIZOVITAL^{®}), VotiVo^{™} *Bacillus firmus,* Clariva^{™} *(Pasteuria nishizawae), Bacillus thuringiensis, Trichoderma spp.,* and/or mutants and metabolites of the respective strains that exhibit activity against insects, mites, nematodes, and/or phytopathogens.

The present disclosure relates to a method for the control or prevention of fungal attack. This method comprises applying to the soil, plant, roots, foliage, seed or locus of the fungus, or to a locus in which the infestation is to be prevented, a fungicidal effective amount of compound I. Compound I is suitable for treatment of various plants at fungicidal levels, while exhibiting low phytotoxicity. Compound I may be useful both in a protectant and/or an eradicant fashion.

The compound of Formula I has been found to have significant fungicidal effects particularly for agricultural use. The compound of Formula I is particularly effective for use with agricultural crops and horticultural plants. Additional benefits may include, but are not limited to, improving the health of a plant; improving the yield of a plant (*e.g.* increased biomass and/or increased content of valuable ingredients); improving the vigor of a plant (*e.g.* improved plant growth and/or greener leaves); improving the quality of a plant (*e.g.* improved content or composition of certain ingredients); and improving the tolerance to abiotic and/or biotic stress of the plant.

In particular, the composition is effective in controlling a variety of undesirable fungi that infect useful orchard, vineyard and plantation crops. In the method of claim 1 it is used to control the following fungi species: gray mold of grapevine and gray mold of strawberry (*Botrytis cinerea*)*.*

Compound I has been found to have significant fungicidal effects on phytopathogenic fungi of agriculturally useful orchard, vineyard and plantation crops. These diseases include *Botrytis cinerea,* which causes gray mold of strawberry and grapevine.

Compound I has a broad range of efficacy as a fungicide. The exact amount of the active material to be applied is dependent not only on the specific active material being applied, but also on the particular action desired, the fungal species to be controlled, and the stage of growth thereof, as well as the part of the plant or other product to be contacted with the compound. Thus, compound I, and formulations containing the same, may not be equally effective at similar concentrations or against the same fungal species.

Compound I is effective in use with plants in a disease-inhibiting and phytologically acceptable amount. The term "disease-inhibiting and phytologically acceptable amount" refers to an amount of a compound that kills or inhibits the plant disease for which control is desired, but is not significantly toxic to the plant. This amount will generally be from about 0.1 to about 1000 ppm (parts per million), with 1 to 500 ppm being preferred. The exact concentration of compound required varies with the fungal disease to be controlled, the type of formulation employed, the method of application, the particular plant species, climate conditions, and the like. A suitable application rate is typically in the range from about 0.10 to about 4 pounds/acre (about 0.01 to 0.45 grams per square meter, g/m²).

Any range or desired value given herein may be extended or altered without losing the effects sought, as is apparent to the skilled person for an understanding of the teachings herein.

### Examples:

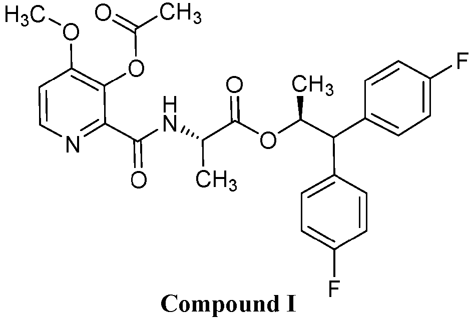

### Field assessment of Botrytis cinerea (BOTRCI) on strawberry and grapevine:

On strawberry: A fungicidal treatment containing Compound I, applied in a 5% EC formulation and tank mixed with an adjuvant (Trycol, 50% w/w at 0.2% v/v), was sprayed on strawberry plants (FRAAN, Candonga variety) at rates of 50, 150 and 200 grams of active ingredient per hectare (g ai/ha). The trial was based on four broadcast applications during the growing season at approximately 10 day intervals with grey mold inoculation after the last application (plant growth stage B85). The treatment was part of an experimental trial designed as a randomized complete block with four replications and a plot size of approximately 2.0 x 5.0 m. Formulations of compound I were applied at water volume of 800 L/ha, using a backpack plot sprayer (BKPCKENG, solo 433; HCSOLID - Albutz ATR80 Yellow nozzle) and pressurized at 300 kPa.

Disease severity was recorded as a percentage of fruit incidence of damaged fruits on a random sample of 100 fruits per plot. Gray mold infection was assessed twice at 10 days after the third application (10DAAC) and 10DAAD. Area under the disease progress curve (AUDPC) was calculated for each plot using the sets of recorded incidence data. Relative AUDPC (% control based on AUDPC) was calculated as percent of the nontreated control. Results are given in Table 9.

Strawberry shelf-life simulation (3 repetitions): Fungicidal treatments were applied to strawberry plants grown in a shade house to obtain healthy fruits. Once matured, the healthy fruits were harvested and transferred to a laboratory for a shelf-simulation study. In the laboratory, the fruits were bleach decontaminated to remove residual chemical residue. Compound I, applied in a 5% EC formulation and mixed with an adjuvant (Trycol, 50% w/w at 0.2% v/v), was sprayed on the healthy strawberries at rates of 50, 100 and 150 grams of active ingredient per hectare (g ai/ha) and allowed to dry completely. The fruits were then inoculated with gray mold and incubated on a laboratory bench at 20 °C.

Disease severity was recorded as a percentage of fruit infection assessments. Gray mold infection was assessed twice after the initial inoculation, 4 days after infection (4DAI) and 6DAI. Area under the disease progress curve (AUDPC) was calculated for each repetition using the sets of recorded severity data. Relative AUDPC (% control based on AUDPC) was calculated as percent of the nontreated control. Results are given in Table 9.

On grapevine: A fungicidal treatment containing Compound I, applied in a 5% EC formulation and tank mixed with an adjuvant (Trycol, 50% w/w at 0.2% v/v), was sprayed only on the bunch portion of grape plants (VITVI, Pinot grey variety) at rates of 50, 150 and 200 grams of active ingredient per hectare (g ai/ha). The trial was based on two applications 28 days apart in open field conditions with disease inoculation 3 days after the last application (plant growth stage B83). The treatment was part of an experimental trial designed as a randomized complete block with four replications and a plot of approximately 2.5 x 7.0 m. Formulations of compound I were applied at water volume of 500 L/ha (bunches only), using a backpack plot sprayer (AIRATOM, Solo 433; Airatom nozzle).

Disease severity was recorded as a percentage of incidence and infection of damaged bunches on a random sample of 100 bunches per plot. Gray mold infection was assessed three times, the first at 22 days after the last application (22DAAB), the second and third at 28DAAB and 36DAAB. Area under the disease progress curve (AUDPC) was calculated for each plot using the sets of recorded severity data. Relative AUDPC (% control based on AUDPC) was calculated as percent of the nontreated control. Results are given in Table 1.

In Table 1 the rating scale of percent control based on AUDPC is as follows:

| % Control | Rating |
|---|---|
| 76 - 100 | A |
| 51 - 75 | B |
| 26 - 50 | C |
| 1 - 25 | D |
| Not tested | E |

**TABLE 1**

| Efficacy of Compound I on Gray Mold of Strawberries and Grapevine (BOTRCI, *Botrytis cinerea*) - Percent Control Based on Area Under Disease Progression Curve (AUDPC) from Fruit Infection Assessments | | | | |
|---|---|---|---|---|
| Compound I (g ai/ha) | | | | |
| | 50 | 100 | 150 | 200 |
| Strawberry | B | NT | A | A |
| Strawberry (Shelf life simualtion)^{a} | B | A | A | NT |
| Grapevine | B | NT | A | A |

^{a}Percent control based on Area Under Disease Progression Curve (AUDPC) from fruit severity assessments

## Claims

1. A method of controlling fungal diseases in orchard, vineyard and plantation crops selected from grapes and strawberries that are at risk of being diseased, wherein the fungal diseases are gray mold of grapevine and gray mold of strawberry, comprising the steps of: contacting at least a portion of a plant and/or an area adjacent to a plant with compound I or a composition including compound I. 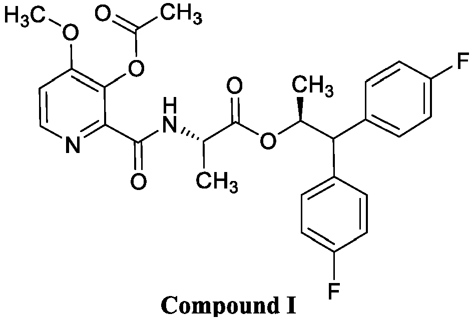 wherein said compound is effective against a plant pathogen and wherein the fungal pathogen is selected from the group consisting of the causal agents of gray mold of grapevine and gray mold of strawberry (*Botrytis cinerea*).

2. The method of claim 1, wherein the composition further includes at least one of one additional agriculturally active ingredient selected from the group consisting of: insecticide, an herbicide, and a fungicide.

## Patentansprüche

1. Verfahren zur Bekämpfung von Pilzkrankheiten in Obstgarten-, Weinberg- und Plantagenkulturen, die aus Trauben und Erdbeeren ausgewählt sind, bei denen ein Erkrankungsrisiko besteht, wobei es sich bei den Pilzerkrankungen um Grauschimmel an Weinreben und Grauschimmel an Erdbeeren handelt, umfassend die Schritte: Inkontaktbringen mindestens eines Teils einer Pflanze und/oder einer Fläche unmittelbar neben einer Pflanze mit Verbindung I oder einer Verbindung I enthaltenden Zusammensetzung, 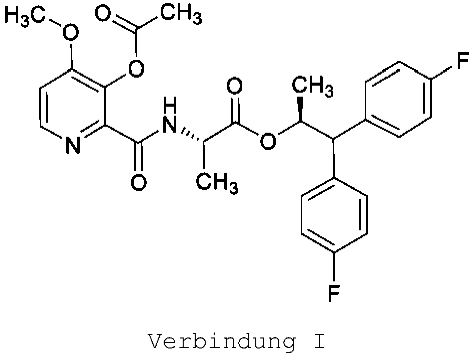 wobei die Verbindung gegen ein Pflanzenpathogen wirksam ist und wobei der Pilzerreger aus der Gruppe bestehend aus den Grauschimmel an Weinreben und Grauschimmel an Erdbeeren verursachenden Erregern (*Botrytis cinerea*) ausgewählt ist.

2. Verfahren nach Anspruch 1, wobei die Zusammensetzung ferner mindestens einen eines zusätzlichen landwirtschaftlich wirksamen Inhaltsstoffs umfasst, der aus der Gruppe bestehend aus Insektizid, einem Herbizid und einem Fungizid ausgewählt ist.

## Revendications

1. Procédé de lutte contre des maladies fongiques dans des cultures de verger, de vignoble et de plantation choisies parmi les raisins et les fraises qui risquent d'être malades, dans lequel les maladies fongiques sont la pourriture grise de la vigne et la pourriture grise de la fraise, comprenant les étapes de : mise en contact d'au moins une partie d'une plante et/ou d'une zone adjacente à une plante avec le composé I ou une composition comprenant le composé I 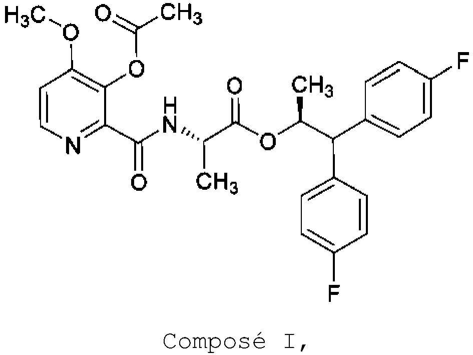 dans lequel ledit composé est efficace contre un pathogène végétal et dans lequel le pathogène fongique est choisi dans le groupe constitué par les agents causaux de la pourriture grise de vigne et de la pourriture grise de fraise (Botrytis cinerea).

2. Procédé selon la revendication 1, dans lequel la composition comprend en outre au moins un ingrédient actif sur le plan agricole supplémentaire choisi dans le groupe constitué par : un insecticide, un herbicide, et un fongicide.
